# EUROPEAN PATENT SPECIFICATION

(11) **EP 0 672 336 B1**
(45) Date of publication and mention of the grant of the patent: **07.08.2002**
(21) Application number: 95610009.3
(22) Date of filing: 14.03.1995
(51) Int. Cl.: A01D 34/66

(54) **A mower**
Mäher
Faucheuse

(30) Priority: 15.03.1994 DK 30294
(43) Date of publication of application: 20.09.1995
(73) Proprietor: JF-FABRIKEN - J. FREUDENDAHL A/S, DK-6400 Sonderborg (DK)
(72) Inventor: Freudendahl, Jorn, DK-6400 Sonderborg (DK); Nielsen, Harald Raun, DK-6470 Sydals (DK)
(74) Representative: Raffnsöe, Knud Rosenstand

(56) References cited:
- EP-A- 0 165 638
- EP-A- 0 211 785
- EP-A- 0 514 314
- CH-A- 661 176
- DE-A- 3 423 410
- FR-A- 1 330 990
- FR-A- 2 232 980
- FR-A- 2 575 897
- GB-A- 792 939
- GB-A- 1 567 939

## Description

The present invention relates to a lift-suspended mower of the type adapted to be moved by a pivoting movement about a pivot between an operating position outside the track of the tractor and a transport position substantially within or close to the track of the tractor, comprising an inner and an outer mowing unit, which in their working positions are placed side by side in such a way that they cut each their adjoining path of crop, the outer mowing unit being positioned further away from the track of the tractor than the inner mowing unit.

Known mowers of this type comprise among others two categories, the first one being suspended at the end of an arm which at its other end is suspended in a frame connected with the lift suspension of the tractor, whereby the arm may pivot in a horizontal plane relative to the frame between the operating position, where it extends substantially transversely to the direction of travel of the tractor, and the transport position, where it extends substantially parallelly with the direction of travel. A mower of this category is e.g. known from FR-A-2 575 897. In the other category the mower is connected with a frame which is suspended in the lift suspension of the tractor, whereby it becomes possible to pivot the mower around a horizontal longitudinal axis from a horizontal operating position to a vertical transport position. Mowers of the first category are in the transport position positioned substantially within the track of the tractor, whereas mowers of the second category in the transport position are positioned outside the track of the tractor, but they do not project particularly far in relation to what is the case in the operating position.

In mowers having a big pass width problems occur in connection with the transport: In respect of the first category because of the fact that the mower in the transport position projects far behind and reduces the manoeuvrability partly by its physical presence partly by acting as a counterweight and by relieving the front wheels of the tractor, whereby the controllability is reduced. In the second category, a mower with a big pass width will in the transport position project high up in the air, which impedes passage below bridges, through gates and the like.

It is the object of the invention to provide a mower of the type mentioned by way of introduction, which mower can be constructed with a big pass width without the occurrence of the above-mentioned problems.

GB-A-792 939 discloses a towed gang mower comprising a row of mowing units extending during operation as well as transport across the track of the tractor. For transport the two ends of the row of mowing units may piecemeal be folded together manually by pivoting movements to reduce the overall width of the mower.

The object is according to the invention obtained by means of a mower which is characteristic in the outer mowing unit being adapted to be positioned closer to the lift-suspension of the tractor in the transport position than in the operating position by another pivoting movement in relation to the inner mowing unit about another pivot, power means being provided for the provision of the pivoting movements. Hereby is attained that the outer end and the centre of gravity of the mower as a whole is brought nearer to the tractor in the transport position, whereby the above-mentioned drawbacks of the prior art are reduced or eliminated.

In an embodiment the mowing units are mutually hinged at adjacent ends, the hinge having preferably a substantially horizontal axis or a substantially vertical axis.

In an embodiment, in which the two mowing units are disc mowing units, the actuators of the two mowing units are preferably designed in such a way that the discs of the two units are driven synchronously and with a predetermined phase displacement. Hereby is achieved that the discs of the two mowing units can be placed in line in the working position without any risk of collision between the knives of the outeresmost adjacent knife discs of the two units.

Means are preferably provided for maintaining the position of the two mowing units relative to each other in the working position. Hereby, the two units will in the working position act like a rigid unit.

In an embodiment, in which the two mowing units are mutually hinged at their adjacent ends, and in which the mowing units close to their hinged ends are carried by an arm connected with the tractor, means are provided for limiting the pivoting of the inner mowing unit relative to the arm. Hereby partly an additional suspension of the inner mower in the transport position is obtained, when it is not outbalanced by the outer mower, partly that in mowers where the two units are hinged about a horizontal axis, an additional lifting may be provided by means of the power means providing the other pivoting movement, when the mower is lifted into operating position by means of the lift of the tractor, for instance when turning in the field.

In a further embodiment, in which the mowing units are carried by an arm connected at one end with the tractor, the inner mowing unit is close to its centre plane carried by the arm at a distance from the other end of that arm, the outer mowing unit is close to its centre plane carried by a second arm which is hinged to the first arm at said other end which is farthest away relative to the tractor, and one of the power means is adapted to swing the second arm relative to the first arm. Thus, a mower is provided in which the two units may be allowed to swing separately in their suspensions in order to adjust better to an uneven field surface.

The invention will be described in detail in the following by means of embodiments with reference to the schematic drawing, in which
Fig. 1 shows a mower according to the invention seen from above in the operating position,
Fig. 2 a view corresponding to Fig. 1, the mower here changing over to transport position,
Fig. 3 the mower according to Fig. 1 seen from the side during change over to transport position,
Fig. 4 a view of the mower according to Fig. 1 seen from behind in operating position with further details,
Fig. 5 a view corresponding to Fig. 1 of a second embodiment, and
Fig. 6 a view of a third embodiment seen from behind in transport position.

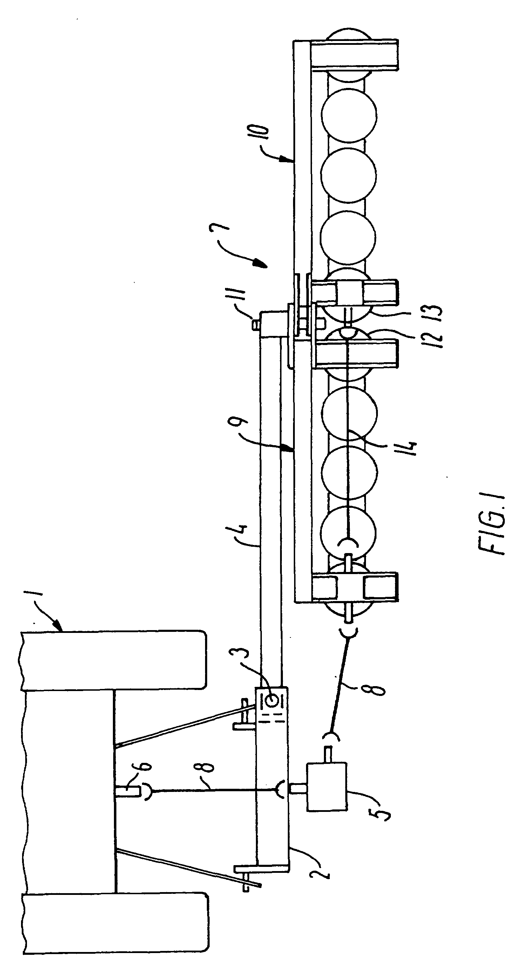

In Figs. 1-4, which show a first embodiment of the invention, reference number 1 refers to a tractor, in the rear lift suspension of which a carrier frame 2 is suspended, said frame carrying a carrier arm 4 which is pivotal about a vertical tap 3. Furthermore, a mitre gear 5 for transfer of tractive power from the power take off shaft 6 of the tractor through drive shafts 8 to a mower 7 suspended in the carrier arm 4.

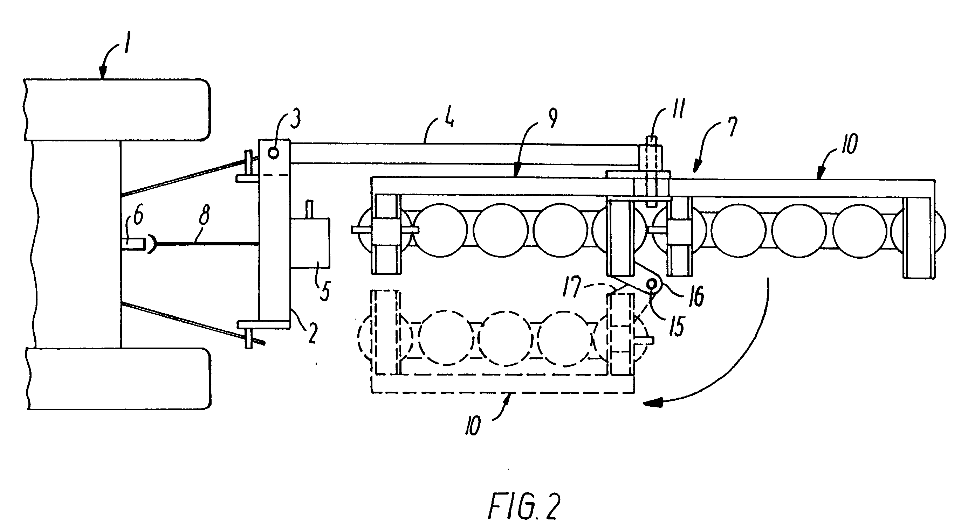

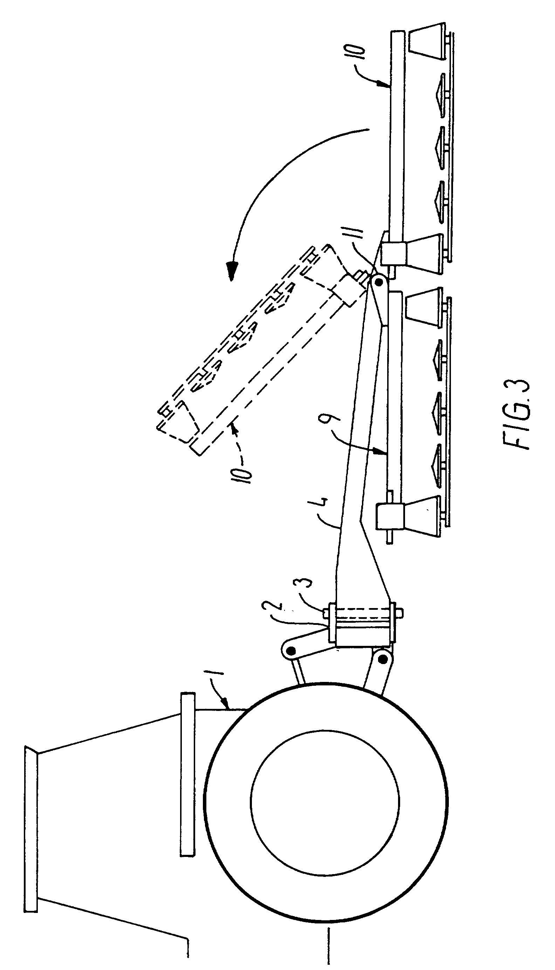

The mower 7 comprises two mowing units 9, 10, which will in the following be termed the inner unit 9 and the outer unit 10 on account of their position relative to the tractor. In the embodiment shown in Figs. 1 and 3 and in Fig. 2 in full-drawn line the two units 9, 10 are hinged to each other and to the end of the carrier arm 4 through a gudgeon 11, the axis of which is horizontal and extends transversely to the carrier arm. Means not shown are provided for fixing the two units 9, 10 in their mutual position in the operating position shown in Fig. 1. The means may be a clamp locking the two units to a rigid unit, or a hold for the mutual pivoting movement of the two units 9, 10, the outer unit 10 being as shown in Fig. 3 swingable anti-clockwise relative to the inner unit 9, but not downwards relative to the position shown in Fig. 23 in full-drawn line.

The mower 7 is, as will appear from the drawing, in this embodiment a disc mower. In that connection it is important that the two adjacent discs 12, 13 on the inner unit 9 and the outer unit 10, respectively, are driven synchronously and with a suitable phase displacement, the risk of collision between the knives of the two discs 12, 13 being eliminated. This is ensured by the power transmission for the outer unit 10 passing through the power transmission for the inner unit 9 over a drive shaft 14.

During conversion of the mower shown in Fig. 1 to transport position the carrier arm 4 is swung around the tap 3 to the position shown in Fig. 2. This swinging is made by means of a per se known but not shown power means such as a hydraulic cylinder. From the position shown in Fig. 1 the outer unit 10 is swung as shown in Fig. 3 up around the gudgeon 11, until it is more or less parallel with the inner unit, whereby the total extension of the mower 7 from the tractor is reduced by the width of the outer unit 10, and the centre of gravity is moved correspondingly forwards.

In Fig. 2 an alternative is shown in broken line, where the two mowers are not mutually connected through the gudgeon 11, but through a gudgeon 15 with a vertical axis connecting the two units 9, 10 through brackets 16, 17 on the two units 9, 10. The outer unit 10 is not swung to a postion above the inner unit, but to the position shown in broken line next to the inner unit. The effect in respect of the extension of the machine from the tractor and the position of the centre of gravity is as described above.

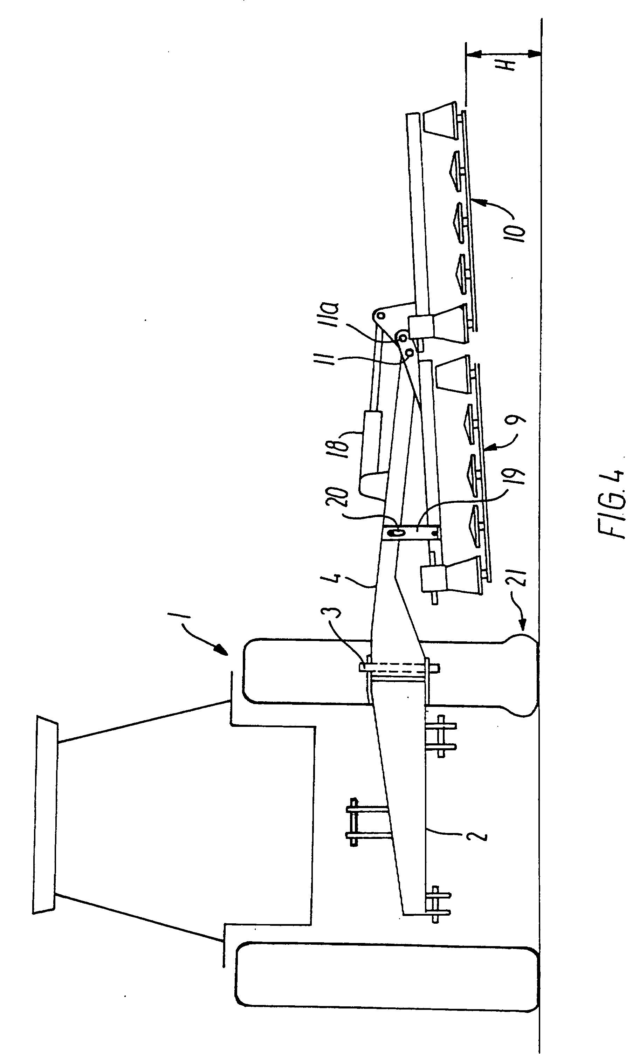

Fig. 4 shows a slightly modified version of the embodiment according to Fig. 1, the two units 9, 10 being here mutually connected through a gudgeon 11a, which is positioned a little bit aside of but parallel with the gudgeon 11. Furthermore, a hydraulic cylinder 18 is shown in Fig. 4 for swinging the outer unit 10. The hydraulic cylinder 18 is at its one end connected with the carrier arm 4 and at its other end connected with the outer unit 10. The inner unit 9 is prevented by a strap 19 from swinging down around the gudgeon 11 and hitting the ground, when the outer unit 10 is swung upwards. The strap 19 is hinged to the inner unit 9 in a manner known per se, but to the carrier arm 4 through an elongate hole 20 in such a way that the inner unit 9 is sure to get a certain movability relative to the carrier arm 4.

Fig. 4 indicates a problem in mowers of the type in question, viz. that their asymmetrical load on the tractor makes it incline to the side a.o. on account of compression of the tyre of the wheel in the side, in which the mower is present, as shown by 21. This entails that the clearance H between the ground and the outer end of the mower 7, when it is lifted by means of the lift-suspension of the tractor, becomes small. This is counteracted in the embodiment shown in Fig. 4 by lifting the outer unit 10 somewhat by means of the hydraulic cylinder 18, whereby the clearance H gets bigger.

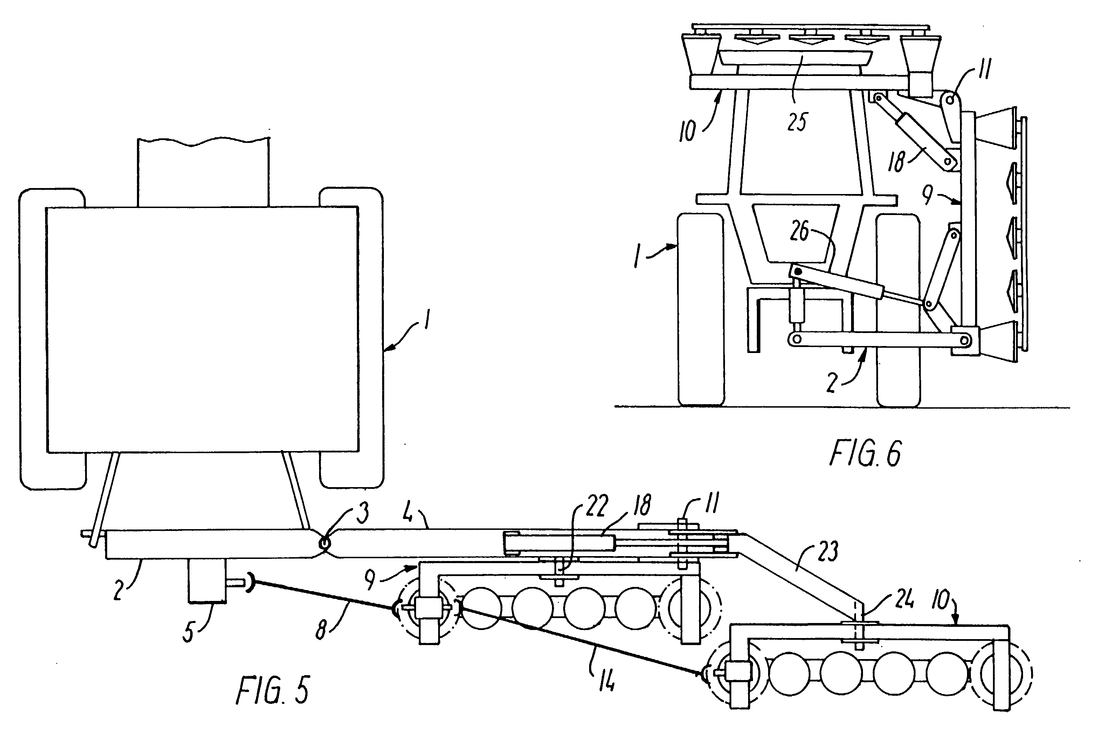

In Fig. 5 another embodiment is shown, in which the inner unit 9 is suspended close to its vertical centre plane parallelly to the working direction by means of a gudgeon 22 which is carried by the carrier arm 4 at a distance from its outer end relative to the tractor, which distance corresponds to the half width of the inner unit. At the outer end of the carrier arm 4 a pivot arm 23 is hinged around the gudgeon 11, said pivot arm carrying a gudgeon 24 at the end which relative to the carrier arm 4 is farthest away, in which gudgeon the outer unit 10 is suspended close to its vertical centre plane parallel to the working direction. The hydraulic cylinder 18 is in this embodiment connected with the carrier arm 4 and the pivot arm 23 for moving the latter between the position shown in Fig. 5, in which it extends substantially in continuation of the carrier arm 4, and a position, in which, corresponding to what is shown in Fig. 3, it is swung over the carrier arm 4. However, the outer unit 10 will by this pivoting movement still be suspended and thereby be moved substantially translationally to a position above the inner unit 9, but closer to the tractor.

Fig. 6 shows a third embodiment, which is something between a per se known mower, which is suspended in the carrier frame 2 at one side for swinging for transport to a substantially vertical position, and the machine shown in Fig. 4. The hydraulic cylinder 18 is, however, at one end connected with the inner unit 9 and at the other end connected with the outer unit 10. During transport the mower is placed in the position shown in Fig. 6, where the outer unit 10 is swung approx. 90° relative to the inner unit 9 around the gudgeon 11, the outer unit 10 by and large not projecting higher than the driver's cabin 25. In the working position the outer unit 10 is by means of the hydraulic cylinder 18 swung to a position parallel to and in continuation of the inner unit 9, which by means of a hydraulic cylinder 26 is swung down into horizontal.

## Claims

1. A lift-suspended mower of the type adapted to be moved by a pivoting movement about a pivot (3) between an operating position outside the track of the tractor and a transport position substantially within or close to the track of the tractor, comprising an inner and an outer mowing unit (9,10), which in their working positions are placed side by side in such a way that they cut each their adjoining path of crop, the outer mowing unit (10) being positioned further away from the track of the tractor than the inner mowing unit **characterized by** the outer mowing unit (10) being adapted to be positioned closer to the lift-suspension of the tractor (1) in the transport position than in the operating position by another pivoting movement in relation to the inner mowing unit (9) about another pivot (11), power means (26, 18) being provided for the provision of the pivoting movements.

2. A mower according to claim 1, **characterized in that** the two mowing units (9,10) are mutually hinged (11, 11a, 15) at adjacent ends.

3. A mower according to claim 2, **characterized in that** the mowing units (9, 10) are mutually hinged through a hinge (11, lla) with a substantially horizontal axis.

4. A mower according to claim 2, **characterized in that** the mowing units (9, 10) are mutually hinged through a hinge (15) with a substantially vertical axis.

5. A mower according to claims 1-4, in which the two mowing units (9, 10) are disc mowing units, **characterized in that** the power transmissions (5, 8, 14) are designed in such a way that the discs (12, 13) of the two units (9, 10) are driven synchroneously and with a predetermined phase displacement.

6. A mower according to claims 1-5, **characterized by** means for maintaining the position of the two mowing units (9, 10) relative to each other in the operating position.

7. A mower according to claims 2-6, in which the mowing units (9, 10) are carried close to their mutually hinged ends by an arm (4) connected with the tractor, **characterized by** means (19, 20) for limiting the pivoting of the inner mowing unit (9) relative to the arm (4).

8. A mower according to claim 1, in which the mowing units (9, 10) are carried by an arm (4) connected at one end with the tractor (1), **characterized in that** the inner mowing unit (9) close to its vertical centre plane parallel to the working direction is carried by the arm (4) at a distance from the other end of that arm, that the outer mowing unit (10) close to its vertical centre plane parallel to the working direction is carried by a second arm (23) which is hinged to the first arm (4) at said other end which is farthest away relative to the tractor (1), and **in that** one of the power means (18) is adapted to swing the second arm (23) relative to the first arm (4).

## Patentansprüche

1. Angehängter Mäher der Art, der durch eine um ein Drehgelenk (3) drehende Bewegung zwischen einer ausserhalb der Traktorspur liegenden Betriebsstellung und einer im wesentlichen innerhalb oder nahe der Traktorspur befindlichen Transportstellung bewegt werden kann, umfassend eine innere und ein äussere Mäheinheit (9, 10), die in ihren Arbeitsstellungen Seite an Seite derart angeordnet sind, derart, dass jede Einheit ihre angrenzende Erntegutbahn mäht, wobei die äussere Mäheinheit (10) von der Traktorspur weiter weg als die innere Mäheinheit angeordnet ist, **dadurch gekennzeichnet, dass** die äussere Mäheinheit (10) durch eine andere Drehbewegung gegenüber der inneren Mäheinheit (9) um ein anderes Drehgelenk (11) in der Transportstellung zum Plazieren näher bei der Aufhängung des Traktors (1) eingerichtet ist als in der Betriebsstellung, und dass Kraftorgane (26, 18) zur Durchführung der Drehbewegungen vorgesehen sind.

2. Mäher nach Anspruch 1, **dadurch gekennzeichnet, dass** die zwei Mäheinheiten (9, 10) an angrenzenden Enden untereinander scharnierverbunden sind (11, 11a, 15).

3. Mäher nach Anspruch 2, **dadurch gekennzeichnet, dass** die Mäheinheiten (9, 10) über ein Scharnier (11, lla) mit im wesentlichen waagrechter Achse untereinander verbunden sind.

4. Mäher nach Anspruch 2, **dadurch gekennzeichnet, dass** die Mäheinheiten (9, 10) über ein Scharnier (15) mit im wesentlichen senkrechter Achse untereinander verbunden sind.

5. Mäher nach Anspruch 1-4, in welchen die zwei Mäheinheiten (9, 10) Scheibenmäher-Einheiten sind, **dadurch gekennzeichnet, dass** die Kraftüberbertragungen (5, 8, 14) derart ausgebildet sind, dass die Scheiben (12, 13) der beiden Einheiten (9, 10) synchronisch und mit vorherbestimmter Phasenverschiebung angetrieben sind.

6. Mäher nach Anspruch 1-5, **gekennzeichnet durch** Mittel zum Aufrechterhalten der Position der beiden Mäheinheiten (9, 10) im Verhältnis zueinander in der Betriebsstellung.

7. Mäher nach Anspruch 2-6, wonach die Mäheinheiten (9, 10) von einem mit dem Traktor verbundenen Arm (4) in der Nähe ihrer untereinander scharnierverbundenen Enden getragen werden, **gekennzeichnet durch** Mittel (19, 20) zum Begrenzen des Drehens der inneren Mäheinheit (9) gegenüber dem Arm (4).

8. Mäher nach Anspruch 1, wonach die Mäheinheiten (9, 10) von einem an einem Ende mit dem Traktor (1) verbundenen Arm (4) getragen werden, **dadurch gekennzeichnet, dass** die innere Mäheinheit (9) in der Nähe ihrer senkrechten Mittelebene parallel zur Arbeitsrichtung von dem Arm (4) in einem Abstand von dem anderen Ende dieses Arms getragen wird, dass die äussere Mäheinheit (10) in der Nähe ihrer senkrechter Mittelebene parallel zur Arbeitsrichtung von einem zweiten Arm (23) getragen wird, welcher zweite Arm an dem im Verhältnis zum Traktor (1) am weitest entfernt liegenden anderen Ende mit dem ersten Arm (4) scharnierverbunden ist, und dass eines der Kraftorgane (18) zum Schwenken des zweiten Arms (23) gegenüber dem ersten Arm (4) eingerichtet ist.

## Revendications

1. Faucheuse suspendue à un engin de levage du type adapté à se déplacer par un mouvement de pivotement autour d'un pivot (3) entre une position d'opération en dehors de la voie du tracteur et une position de transport essentiellement dans ou près de la voie du tracteur, comprenant une unité intérieure et extérieure de faucheuse (9, 10) qui sont placées l'une à côté de l'autre dans leurs positions de travail d'une telle façon qu'elles coupent chacune leur chemin adjacent de récolte, l'unité extérieure de faucheuse (10) étant positionnée plus loin de la voie du tracteur que l'unité intérieure de faucheuse, **caractérisée par** l'unité extérieure de faucheuse (10) étant adaptée à être positionnée plus près de la suspension à un engin de levage du tracteur (1) dans la position de transport que dans la position d'opération par un autre mouvement à pivotement par rapport à l'unité intérieure de faucheuse (9) autour d'un autre pivot (11), des moyens d'énergie (26, 18) étant pourvus pour assurer les mouvements à pivotement.

2. Faucheuse selon la revendication 1, **caractérisée en ce que** les deux unités de faucheuse (9, 10) sont articulées l'une à l'autre (11, 11a, 15) à des bouts adjacents.

3. Faucheuse selon la revendication 2, **caractérisée en ce que** les unités de faucheuse (9, 10) sont articulées l'une à l'autre par une charnière (11, 11a) avec un axe essentiellement horizontal.

4. Faucheuse selon la revendication 2, **caractérisée en ce que** les unités de faucheuse (9, 10) sont articulées l'une à l'autre par une charnière (11, 11a) avec un axe essentiellement vertical.

5. Faucheuse selon les revendications 1-4, dans laquelle les deux unités de faucheuse (9, 10) sont des unités de faucheuse à disque, **caractérisée en ce que** les transmissions d'énergie (5, 8, 14) sont conçues d'une telle manière que les disques (12, 13) des deux unités (9, 10) sont actionnés en synchronisme et avec un déphasage prédéterminé.

6. Faucheuse selon les revendications 1-5, **caractérisée par** des moyens pour maintenir la position des deux unités de faucheuse (9, 10) l'une par rapport à l'autre dans la position d'opération.

7. Faucheuse selon les revendications 2-6, dans laquelle les unités de faucheuse (9, 10) sont portées près de leurs bouts l'un articulé avec l'autre par un bras (4) relié au tracteur, **caractérisée par** des moyens (19, 29) pour limiter le pivotement de l'unité intérieure de faucheuse (9) par rapport au bras (4).

8. Faucheuse selon la revendication 1, dans laquelle les unités de faucheuse (9, 10) sont portées par un bras (4) relié à l'un bout au tracteur (1), **caractérisée en ce que** l'unité intérieure de faucheuse (9) près de son plan central, vertical et parallèle à la direction de travail est portée par le bras (4) à une distance de l'autre bout de ce bras, **en ce que** l'unité extérieure de faucheuse (10) près de son plan central, vertical et parallèle à la direction de travail est portée par un deuxième bras (23) qui est articulé au premier bras (4) audit autre bout qui est le plus éloigné par rapport au tracteur (1), et **en ce que** l'un des moyens d'énergie (18) est adapté à faire tourner le deuxième bras (23) par rapport au premier bras (4).
